# EUROPEAN PATENT APPLICATION

(11) **EP 4 273 347 A1**
(43) Date of publication of application: **08.11.2023**
(21) Application number: 21912601.8
(22) Date of filing: 24.03.2021
(51) Int. Cl.: E04F 15/02, E04F 15/10, E04F 15/18, B32B 5/02, B32B 5/26, B32B 29/02, B32B 29/06, B32B 27/32, B32B 27/36, B32B 27/30, B32B 27/12, B32B 37/06, B32B 7/12, B32B 33/00

(54) **HIGH-STRENGTH FIREPROOF BOARD, A WEAR-RESISTANT FIREPROOF VENEER USING SAME AS BASE MATERIAL, AND MANUFACTURING METHOD**

(30) Priority: 31.12.2020 CN 202011638186
(71) Applicant: Taizhou Gorgeous New Materials Co., Ltd, Taizhou, Jiangsu 225300 (CN)
(72) Inventor: YUAN, Jun, Taizhou, Jiangsu 225300 (CN); CHENG, Jinshan, Taizhou, Jiangsu 223500 (CN); CHEN, Juan, Taizhou, Jiangsu 223500 (CN); QIAN, Haiqing, Taizhou, Jiangsu 223500 (CN); WANG, Chunyang, Taizhou, Jiangsu 223500 (CN)
(74) Representative: Schwenderling, Jens
(86) International application number: PCT/CN2021/082697
(87) International publication number: WO 2022/141831

(57) **Abstract**

A high-strength fireproof board, which has two structures, a first structure being a three-layer hot-pressed composite structure composed of a fiber layer, a foamed fiber layer, and a fiber layer from top to bottom, and a second structure being a hot-pressed composite of fiber layers. Also disclosed is a wear-resistant fireproof veneer, which is manufactured from the comprised high-strength fireproof board by means of one-step hot-pressing molding, or two-step hot-pressing molding, or gluing and molding. Also disclosed is a high-strength fireproof board and a method for manufacturing a wear-resistant veneer by using the high-strength fireproof board as a base material. The high-strength fireproof board and the wear-resistant veneer are made of thermosetting resin, and have characteristics of flame retardant, wear resistance, high/low temperature resistance, sound absorption, and static electricity prevention.

## Description

### Technical field

This invention belongs to technical field, and mainly relates to one kind of high strength fireproof board, wear resistant fireproof decorative panel and the manufacturing method thereof.

### Technical background

Promoting new follow up processing product of melamine foam from the aspects of flame retardant, environmental protection, and energy conservation, especially follow up processing product of melamine foam such as melamine foam, new fibers of melamine foam, flame retardant melamine foam to enter into application market of high technology field such as aviation, highway transportation, electronic information, environmental protection, is appealing to be more and more important.

The foaming technology of melamine foam is via at first producing modified melamine foam by substitution reaction, then synthesizing melamine foam formaldehyde resin with formaldehyde. Striving to develop new deep processing product using melamine foam as raw material, extending the industrial chain is undoubtedly a good solution. On one hand, it can stimulate the consumption of melamine foam and ensure that the melamine foam industry develop healthily, stably, and sustainably. On the other hand, the rapid increased melamine production capability also provides stable raw material guarantee for industrialization of these new type products. In the meantime, the low market price of melamine foam also gives a good market opportunity for the development of new downstream products, resulting in higher cost performance ratio of downstream products and higher market competitive. Then add in environmental emulsifier, mix foam agent and catalyst evenly, a new foamed plastic of above 99% opening with three-dimensional structure would be formed after the mixture being foamed in high temperature and molded in high temperature.

As a new type chemical material of low density, flame retardant, sound absorbing, melamine foam has important application value in industrial fields such as civil, industrial, architecture, transportation, aviation, military, daily chemical, and electronic information, especially being used on poor conditions that require flame retardant, high temperature, and low frequency noise absorbing, and become an unreplaceable material in new chemical material field and a new chemical environmental protection material which would have huge development prospect in 21^{st} century. Extensive application of melamine foam in seat pads of vehicles such as car, ship, train, and airplane replacing expanded polystyrene, would lower weight of itself effectively, reduce power consumption, have good flame retardant property.

### Invention content

The purpose of this invention is to overcome the disadvantage of existing decorative panel, and provides a kind of high strength fireproof board, a kind of wear resistant decorative panel basing on high strength fireproof board and manufacturing method thereof. High strength fireproof board and wear resistant decorative panel are made of thermosetting resin, and have characters such as flame retardant, wear resistant, high temperature resistant, low temperature resistant, sound absorbing and antistatic.

A kind of high strength fireproof board is characterized in that the high strength fireproof boards has two kinds of structures, the first structure is ABA structure of three layers being hot pressed composite, from top to bottom is respectively fiber layer, foam fiber layer, and fiber layer. The second structure is fiber layer hot pressed composite.

A kind of wear resistant fireproof decorative panel of this invention is characterizing in that the wear resistant fireproof decorative panel can be one-time hot press mold or two-time hot press mold or glue coated composite mold.

The one-time hot press molded wear resistant fireproof decorative panel has four structures, the first structure is respectively from top to bottom wear presentation layer, fiber layer, foam fiber layer, fiber layer, and balance layer; the second structure is respectively from top to bottom wear presentation layer, fiber layer, and balance layer; the third structure is respectively from top to bottom wear layer, pattern layer, fiber layer, foam fiber layer, fiber layer, and balance layer; the fourth structure is respectively from top to bottom wear layer, pattern layer, fiber layer and balance layer.

The two-time hot press molded wear resistant fireproof decorative panel has two structures, the first structure is respectively from top to bottom wear presentation layer, high strength fireproof board, and balance layer; the second structure is respectively from top to bottom wear layer, pattern layer, high strength fireproof board, and balance layer.

The glue coated composite wear resistant fireproof decorative panel has the structure of respectively from top to bottom wear presentation layer, glue, high strength fireproof board, glue, and balance layer.

The stated wear presentation layer is commercially available melamine sprayed paper or made by cutting printed patterned paper that has been dried after being impregnated with mixture of thermosetting resin then dried after being roll coated on the surface with melamine wear resistant glue.

The stated wear layer is commercially available melamine wear paper or made by cutting transparent paper that has been dried after being impregnated with mixture of thermosetting resin then dried after being roll coated on the surface with melamine wear resistant glue.

The stated fiber layer is made by cutting one single or multiple pieces of fiber sheets that have been dried after being impregnated with mixture of thermosetting resin.

The stated foam fiber layer is made by cutting one single or multiple pieces of fiber sheets that have been dried after being impregnated with foam mixture of thermosetting resin.

The stated pattern layer is made by printing patterns on paper or white film which is made from one single material of PE, PP, PET, PETG and PVC.

The stated balance layer is made of commercially available melamine balance paper or made by cutting paper that has been dried after being impregnated with mixture of thermosetting resin.

The stated fiber sheet is the sheet made of one single kind or several kinds of chemical fiber, natural fiber, and inorganic fiber after being knitted or needled. The stated chemical fiber is one single kind or several kinds of polyester, polypropylene, acrylic, spandex, polyamide, and vinal. Natural fiber is one single kind or several kinds of fibrilia, cotton fiber, bamboo fiber, wood fiber, and straw fiber. Inorganic fiber is one kind or several kinds of carbon fiber, glass fiber, aluminum silicate fiber, ceramic fiber, and basalt fiber.

The stated mixture of thermosetting resin is made of thermosetting resin, curing agent, graphene oxide, and water, these specific components in parts and weight are:

| | |
|---|---|
| Thermosetting resin | 100 parts |
| Curing agent | 0.5-2 parts |
| Graphene oxide | 0-2 parts |
| Water | 1-40 parts |

The stated melamine wear resistant glue is made of melamine formaldehyde resin, curing agent, polyurethane resin, nano-aluminum oxide, and water, and these specific components in parts and weight are:

| | |
|---|---|
| Melamine formaldehyde resin | 100 parts |
| Curing agent | 1-3 parts |
| Polyurethane | 30-50 parts |
| Nano aluminum oxide | 10-30 parts |
| Water | 1-10 parts |

The stated foam mixture of thermosetting resin in made of thermosetting resin, curing agent, foaming agent, and water, these specific components in parts and weight are:

| | |
|---|---|
| Thermosetting resin | 100 parts |
| Curing agent | 0.5-2 parts |
| Foaming agent | 0-10 parts |
| Polysorbate-80 | 2-3 parts |
| Water | 1-40 parts |

The stated thermosetting resin is one single kind of several kinds of melamine formaldehyde resin, phenolic resin, epoxy resin, and unsaturated polyester.

The stated curing agent is one single kind or several kinds of polyamine, anhydride, polyether, and methyl ethyl ketone peroxide.

The stated manufacturing method of high strength fireproof board is selecting corresponding tray of pressing machine according to the thickness of high strength fireproof board; from bottom to top laying the release film, each layer from bottom to top of high strength fireproof board according to structure, and release film into the tray; hot pressing and foaming for 2-60 minutes on condition of 130°C-160°C, 1-20MPa pressure in hot pressing machine; chilling for 10-30 minutes on condition of 1-20MPa pressure in cold pressing machine; and forming high strength fireproof board after removing the release film.

The stated wear resistant fireproof decorative panel has 3 manufacturing methods, the process of one-time hot press molding method is selecting corresponding tray of pressing machine according to the thickness of wear resistant fireproof decorative panel; from bottom to top laying bottom pattern, release film, layers from bottom to top according to the structure of one time hot press molding wear resistant fireproof decorative panel, release film, emboss pattern into the tray; hot pressing for 2-60 minutes on condition of 130°C -160°C, 1-20MPa pressure in hot pressing machine; chilling for 10-30 minutes on condition of 1-20MPa pressure in cold pressing machine; removing emboss pattern, release film, bottom pattern, forming one-time hot press molding wear resistant fireproof decorative panel. The process of two-time hot press molding method is manufacturing high strength fireproof board according to the method disclosed in this invention, selecting corresponding press machine tray according to the thickness of two-step wear resistant fireproof decorative panel, from bottom to top laying each layer of two-step wear resistant fireproof decorative panel respectively into the tray, hot pressing for 0.5-10 minutes on the condition of 130°C-190°C, 1-50MPa, forming two-time hot press molding wear resistant fireproof decorative panel. The process of glue coat composite method is manufacturing high strength fireproof board according to the manufacturing method of high strength fireproof board disclosed in this invention, coating glue on both surfaces of high strength fireproof board, attaching wear resistant presentation layer onto to top surface, attaching balance layer to onto the bottom surface.

The high strength fireproof board is applied as partition board, protection board, and when applied to decorative panel it would be applied as decorative panel and sound insulation board.

The application of wear resistant fireproof decorative panel in flooring, wall board, and decorative board.

The beneficial effect of this invention is that, melamine molecules have a majority of nitrogen, and nitrogen would escape when melamine molecules decompose during combustion process, resulting in self-extinguishing without adding in any fire retardant or other additives, it could reach standard requirements as following, B1 level low combustible material standard by DIN4102 of German; UL94-V0 level high flame retardant material standard by UL of US; BS 6852, NF F16-101, DIN5510 fire prevention certificate by EU; B level(fire retardant) of flame retardant standard by GB/T8624-2006 of China. With add nano aluminum oxide to the top surface, the properties of wear resistant and scratch resistant are enhanced, exceeding the requirement of level A1 gloss retention and level B1 micro scratch of EN16094 standard. It is constructed by three-dimensional network and with high opening rate (more than 99%), so that sound wave would immediately enter deep into foam and get transferred to vibration of gridding, and finally be consumed and absorbed. In the meantime, reflected wave would be eliminated effectively, resulting in good sound insulation property in wide audio-frequency range, and outstanding effect of low-frequency noise absorbing. With the unique characterized heat stability, it could be applied in high temperature area where there is direct sunlight and underfloor heating. Adding graphene oxide increases the strength of board, and so it would also have good toughness and antistatic property. Application of water-soluble thermosetting resin mixture would be more environmental when solvent free.

### Descriptions for the figures

To make it easier to clearly understand the content of this invention, in the following describes further in detail of this invention according to implementations and with combination of figures. Among which:
Figure 1 is the figure of the three-layer hot press composite which is the first structure ABA of high strength fireproof board of this invention, the appended tags of figure 1 are: 11-fiber layer, 12-foam fiber layer, 13-fiber layer.
Figure 2 is the figure of the first structure of one-time hot press mold of wear resistant fireproof decorative panel of this invention, the appended tags of figure 2 are: 21-wear presentation layer, 22-fiber layer, 23-foam layer, 24-fiber layer, 25-balance layer.
Figure 3 is the figure of the second structure of one-time hot press mold of wear resistant fireproof decorative panel of this invention, the appended tags of figure 3 are: 31-wear presentation layer, 32-fiber layer, 33-balance layer.
Figure 4 is the figure of the third structure of one-time hot press mold of wear resistant fireproof decorative panel of this invention, the appended tags of figure 4 are: 41-wear layer, 42-pattern layer, 43-fiber layer, 44-foam layer, 45-fiber layer, 46-balance layer.
Figure 5 is the figure of the fourth structure of one-time hot press mold of wear resistant fireproof decorative panel of this invention, the appended tags of figure 5 are: 51-wear layer, 52-pattern layer, 53-fiber layer, 54-balance layer.
Figure 6 is the figure of the first structure of two-time hot press mold of wear resistant fireproof decorative panel of this invention, the appended tags of figure 6 are: 61-wear presentation layer, 62-high strength board, 63-balance layer.
Figure 7 is the figure of the second structure of two-time hot press mold of wear resistant fireproof decorative panel of this invention, the appended tags of figure 7 are: 71-wear layer, 72-pattern layer, 73-high strength fireproof board, 74-balance layer.
Figure 8 is the figure of the structure of glue coat composite of wear resistant fireproof decorative panel of this invention, the appended tags of figure 8 are: 81-wear presentation, 82-glue, 83-high strength fireproof board, 84-glue, 85-balance layer.

### Implementations

### Implementation 1

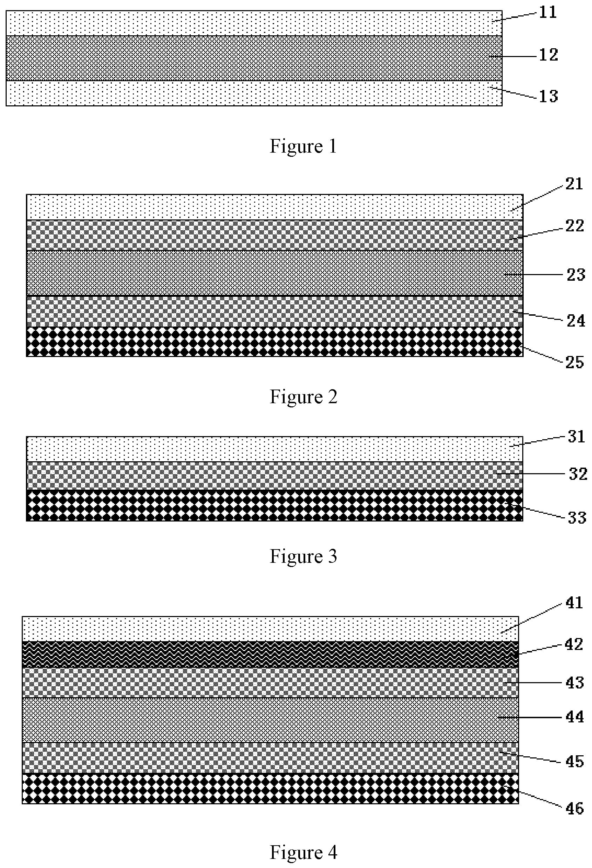

A kind of high strength fireproof board is characterized in that the high strength fireproof board has two structures; the first structure is ABA three-layer hot press composite structure, as shown in figure 1 from top to bottom, fiber layer 11, foam fiber layer 12, fiber layer 13. The second structure is hot press mold of fiber layer. The fiber layer is made by cutting one single or multiple pieces of fiber sheets that have been dried after being impregnated with mixture of thermosetting resin. The foam fiber layer is made by cutting one single or multiple pieces of fiber sheets that have been dried after being impregnated with foam mixture of thermosetting resin. The fiber sheet is the sheet made of one single kind or several kinds of chemical fiber, natural fiber, and inorganic fiber after being knitted or needled. The stated chemical fiber is one single kind or several kinds of polyester, polypropylene, acrylic, spandex, polyamide, and vinal. Natural fiber is one single kind or several kinds of fibrilia, cotton fiber, bamboo fiber, wood fiber, and straw fiber. Inorganic fiber is one kind or several kinds of carbon fiber, glass fiber, aluminum silicate fiber, ceramic fiber, and basalt fiber.

The mixture of thermosetting resin is made of thermosetting resin, curing agent, graphene oxide, and water, these specific components in parts and weight are:

| | |
|---|---|
| Thermosetting resin | 100 parts |
| Curing agent | 0.5-2 parts |
| Graphene oxide | 0-2 parts |
| Water | 1-40 parts |

The foam mixture of thermosetting resin in made of thermosetting resin, curing agent, foaming agent, and water, these specific components in parts and weight are:

| | |
|---|---|
| Thermosetting resin | 100 parts |
| Curing agent | 0.5-2 parts |
| Foaming agent | 0-10 parts |
| Polysorbate-80 | 2-3 parts |
| Water | 1-40 parts |

The thermosetting resin is one single kind of several kinds of melamine formaldehyde resin, phenolic resin, epoxy resin, and unsaturated polyester.

The curing agent is one single kind or several kinds of polyamine, anhydride, polyether, and methyl ethyl ketone peroxide

The test product in this implementation is three-layer hot press composite structure, the fiber layer is made by cutting two pieces of fiber sheets that have been dried after being impregnated with mixture of thermosetting resin. The foam fiber layer is made by cutting two pieces of fiber sheets that have been dried after being impregnated with foam mixture of thermosetting resin. The fiber sheet is made of fibrilia after being knitted. The components in parts and weight of thermosetting resin mixture are: 100 parts of thermosetting resin, 1 part of curing agent, 1 part of graphene oxide, 20 parts of water. The components in parts and weight of thermosetting resin foam mixture are: 100 parts of thermosetting resin, 1 part of curing agent, 5 parts of foaming agent, 2.5 parts of polysorbate-80, 20 parts of water. The thermosetting resin is phenolic resin, curing agent is polyamine.

The manufacturing method of high strength fireproof board stated above is: selecting corresponding tray of pressing machine according to the thickness of high strength fireproof board; from bottom to top laying the release film, each layer from bottom to top of high strength fireproof board according to structure, and release film into the tray; hot pressing and foaming for 2-60 minutes on condition of 130°C-160°C, 1-20MPa pressure in hot pressing machine; chilling for 10-30 minutes on condition of 1-20MPa pressure in cold pressing machine; and forming high strength fireproof board after removing the release film.

### Implementation 2

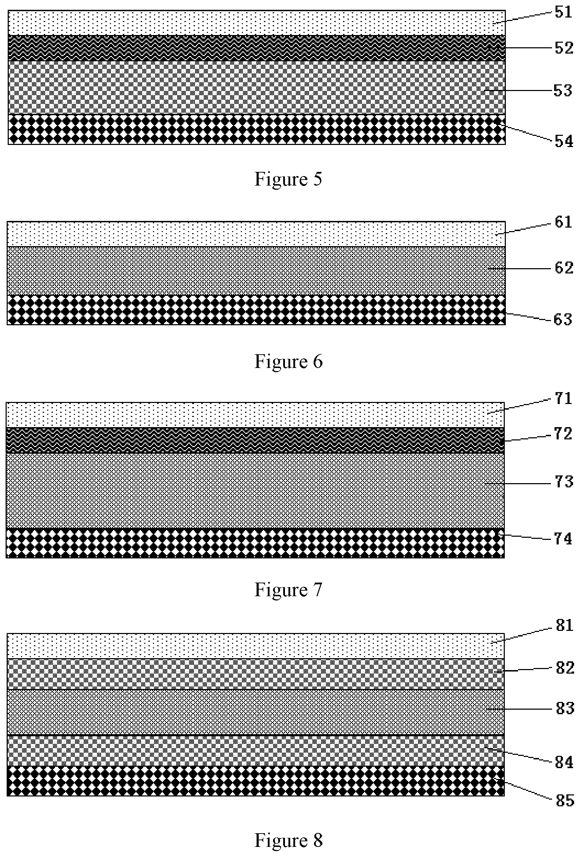

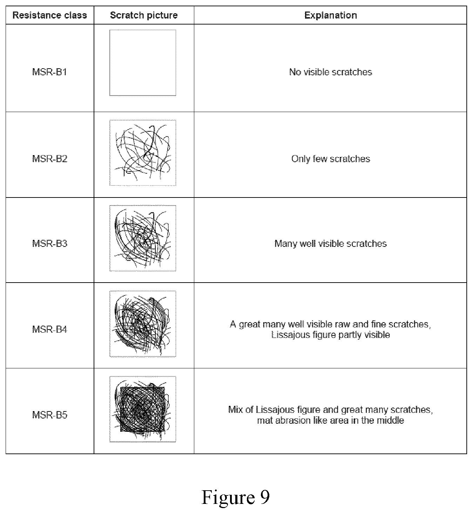

A kind of wear resistant fireproof decorative panel is characterized in that the wear resistant fireproof decorative panel is one-time hot press molded and has four structures, as shown in figure 2, the first structure is respectively from top to bottom wear presentation layer 21, fiber layer 22, foam fiber layer 23, fiber layer 24, balance layer 25; as shown in figure 3, the second structure is respectively from top to bottom wear presentation layer 31, fiber layer 32, balance layer 33; as shown in figure 4, the third structure is respectively from top to bottom wear layer 41, pattern layer 42, fiber layer 43, foam fiber layer 44, fiber layer 45, balance layer 46; as shown in figure 5, the fourth structure is respectively from top to bottom wear layer 51, pattern layer 52, fiber layer 53, balance layer 54. The wear presentation layer is commercially available melamine sprayed paper or made by cutting printed patterned paper that has been dried after being impregnated with mixture of thermosetting resin then dried after being roll coated on the surface with melamine wear resistant glue. The wear layer is commercially available transparent melamine wear paper or made by cutting transparent paper that has been dried after being impregnated with mixture of thermosetting resin then dried after being roll coated on the surface with melamine wear resistant glue. The fiber layer is made by cutting one single or multiple pieces of fiber sheets that have been dried after being impregnated with mixture of thermosetting resin. The foam fiber layer is made by cutting one single or multiple pieces of fiber sheets that have been dried after being impregnated with foam mixture of thermosetting resin. The pattern layer is made by printing patterns on paper or white film which is made from one single material of PE, PP, PET, PETG and PVC. The balance layer is made of commercially available melamine balance paper or made by cutting paper that has been dried after being impregnated with mixture of thermosetting resin. The fiber sheet is the sheet made of one single kind or several kinds of chemical fiber, natural fiber, and inorganic fiber after being knitted or needled. The stated chemical fiber is one single kind or several kinds of polyester, polypropylene, acrylic, spandex, polyamide, and vinal. Natural fiber is one single kind or several kinds of fibrilia, cotton fiber, bamboo fiber, wood fiber, and straw fiber. Inorganic fiber is one kind or several kinds of carbon fiber, glass fiber, aluminum silicate fiber, ceramic fiber, and basalt fiber.

The mixture of thermosetting resin is made of thermosetting resin, curing agent, graphene oxide, and water, these specific components in parts and weight are:

| | |
|---|---|
| Thermosetting resin | 100 parts |
| Curing agent | 0.5-2 parts |
| Graphene oxide | 0-2 parts |
| Water | 1-40 parts |

The melamine wear resistant glue is made of melamine formaldehyde resin, curing agent, polyurethane resin, nano-aluminum oxide, and water, and these specific components in parts and weight are:

| | |
|---|---|
| Melamine formaldehyde resin | 100 parts |
| Curing agent | 1-3 parts |
| Polyurethane | 30-50 parts |
| Nano aluminum oxide | 10-30 parts |
| Water | 1-10 parts |

The foam mixture of thermosetting resin in made of thermosetting resin, curing agent, foaming agent, and water, these specific components in parts and weight are:

| | |
|---|---|
| Thermosetting resin | 100 parts |
| Curing agent | 0.5-2 parts |
| Foaming agent | 0-10 parts |
| Polysorbate-80 | 2-3 parts |
| Water | 1-40 parts |

The thermosetting resin is one single kind of several kinds of melamine formaldehyde resin, phenolic resin, epoxy resin, and unsaturated polyester.

The curing agent is one single kind or several kinds of polyamine, anhydride, polyether, and methyl ethyl ketone peroxide.

The test product in this implementation is of the fourth structure, the wear layer is commercially available transparent melamine wear paper or made by cutting transparent paper that has been dried after being impregnated with mixture of thermosetting resin then dried after being roll coated on the surface with melamine wear resistant glue. The fiber layer is made by cutting one single piece of fiber sheets that have been dried after being impregnated with mixture of thermosetting resin. The balance layer is made by cutting commercially available melamine paper that has been dried after being impregnated with mixture of thermosetting resin. The fiber sheet is made of polyester, acrylic after being needled. The components in parts and weight of thermosetting resin mixture are: 100 parts of thermosetting resin, 1.5 parts of curing agent, 1 part of graphene oxide, 20 parts of water. The components in parts and weight of melamine wear resistant glue are: 100 parts of melamine formaldehyde resin, 2 parts of curing agent, 40 parts of polyurethane, 20 parts of nano aluminum oxide, 5 parts of water. The thermosetting resin is melamine formaldehyde resin, curing agent is anhydride and polyether.

The manufacturing method of wear resistant fireproof decorative panel stated above is: selecting corresponding tray of pressing machine according to the thickness of wear resistant fireproof decorative panel; from bottom to top laying bottom pattern, release film, layers from bottom to top according to the structure of one time hot press molding wear resistant fireproof decorative panel, release film, emboss pattern into the tray; hot pressing for 2-60 minutes on condition of 130°C-160°C, 1-20MPa pressure in hot pressing machine; chilling for 10-30 minutes on condition of 1-20MPa pressure in cold pressing machine; removing emboss pattern, release film, bottom pattern, forming one-time hot press molding wear resistant fireproof decorative panel.

### Implementation 3

A kind of wear resistant fireproof is characterized in that the wear resistant fireproof decorative panel is two-time hot press molded and has two structures, as shown in figure 6, the first structure is respectively from top to bottom wear presentation layer 61, high strength fireproof board 62, balance layer 63; as shown in figure 7, the second structure is respectively from top to bottom wear layer 71, pattern layer 72, high strength fireproof board 73, balance layer 74. The wear presentation layer is commercially available melamine sprayed paper or made by cutting printed patterned paper that has been dried after being impregnated with mixture of thermosetting resin then dried after being roll coated on the surface with melamine wear resistant glue. The wear layer is commercially available transparent melamine wear paper or made by cutting transparent paper that has been dried after being impregnated with mixture of thermosetting resin then dried after being roll coated on the surface with melamine wear resistant glue. The fiber layer is made by cutting one single or multiple pieces of fiber sheets that have been dried after being impregnated with mixture of thermosetting resin. The foam fiber layer is made by cutting one single or multiple pieces of fiber sheets that have been dried after being impregnated with foam mixture of thermosetting resin. The pattern layer is made by printing patterns on paper or white film which is made from one single material of PE, PP, PET, PETG and PVC. The balance layer is made of commercially available melamine balance paper or made by cutting paper that has been dried after being impregnated with mixture of thermosetting resin. The fiber sheet is the sheet made of one single kind or several kinds of chemical fiber, natural fiber, and inorganic fiber after being knitted or needled. The stated chemical fiber is one single kind or several kinds of polyester, polypropylene, acrylic, spandex, polyamide, and vinal. Natural fiber is one single kind or several kinds of fibrilia, cotton fiber, bamboo fiber, wood fiber, and straw fiber. Inorganic fiber is one kind or several kinds of carbon fiber, glass fiber, aluminum silicate fiber, ceramic fiber, and basalt fiber.

The mixture of thermosetting resin is made of thermosetting resin, curing agent, graphene oxide, and water, these specific components in parts and weight are:

| | |
|---|---|
| Thermosetting resin | 100 parts |
| Curing agent | 0.5-2 parts |
| Graphene oxide | 0-2 parts |
| Water | 1-40 parts |

The melamine wear resistant glue is made of melamine formaldehyde resin, curing agent, polyurethane resin, nano-aluminum oxide, and water, and these specific components in parts and weight are:

| | |
|---|---|
| Melamine formaldehyde resin | 100 parts |
| Curing agent | 1-3 parts |
| Polyurethane | 30-50 parts |
| Nano aluminum oxide | 10-30 parts |
| Water | 1-10 parts |

The thermosetting resin is one single kind of several kinds of melamine formaldehyde resin, phenolic resin, epoxy resin, and unsaturated polyester.

The curing agent is one single kind or several kinds of polyamine, anhydride, polyether, and methyl ethyl ketone peroxide.

The test product of this implementation is of the first structure, the stated wear presentation layer is made by cutting commercially available printed patterned paper that has been dried after being impregnated with mixture of thermosetting resin then dried after being roll coated on the surface with melamine wear resistant glue. The high strength fireproof is the test product of implementation 1. The balance layer is made by cutting commercially available melamine paper that has been dried after being impregnated with mixture of thermosetting resin. The components in parts and weight of thermosetting resin mixture are: thermosetting resin 100 parts, curing agent 1 part, graphene oxide 1part, water 40 parts; The components in parts and weight of melamine wear resistant glue are: melamine formaldehyde resin 100 parts, curing agent 2parts, polyurethane 40 parts, nano aluminum oxide 20 parts, water 6 parts; the thermosetting resin is epoxy resin, curing agent is methyl ethyl ketone peroxide.

The stated manufacturing method of wear resistant fireproof decorative panel is: producing high strength fireproof board according to the manufacturing method of high strength fireproof board disclosed in this invention, selecting corresponding tray of pressing machine according to the thickness of two-time hot press molded wear resistant fireproof decorative panel; laying layers from bottom to top according to the structure of two-time hot press molding wear resistant fireproof decorative panel, release film, emboss pattern into the tray; hot pressing for 0.5-10 minutes on condition of 130°C-190°C, 1-50MPa pressure in hot pressing machine; forming two-time hot press molding wear resistant fireproof decorative panel.

### Implementation 4

A kind of wear resistant fireproof panel is characterized in that the wear resistant decorative panel is glue coat composite. As shown in figure 8, the structure is respectively from top to bottom wear presentation layer 81, glue 82, high strength fireproof board 83, glue 84, and balance layer 85. The wear presentation layer is commercially available melamine sprayed paper or made by cutting printed patterned paper that has been dried after being impregnated with mixture of thermosetting resin then dried after being roll coated on the surface with melamine wear resistant glue. The high strength fireproof board is made according to this implementation. The balance layer is made of commercially available melamine balance paper or made by cutting paper that has been dried after being impregnated with mixture of thermosetting resin. The fiber sheet is the sheet made of one single kind or several kinds of chemical fiber, natural fiber, and inorganic fiber after being knitted or needled. The stated chemical fiber is one single kind or several kinds of polyester, polypropylene, acrylic, spandex, polyamide, and vinal. Natural fiber is one single kind or several kinds of fibrilia, cotton fiber, bamboo fiber, wood fiber, and straw fiber. Inorganic fiber is one kind or several kinds of carbon fiber, glass fiber, aluminum silicate fiber, ceramic fiber, and basalt fiber.

The mixture of thermosetting resin is made of thermosetting resin, curing agent, graphene oxide, and water, these specific components in parts and weight are:

| | |
|---|---|
| Thermosetting resin | 100 parts |
| Curing agent | 0.5-2 parts |
| Graphene oxide | 0-2 parts |
| Water | 1-40 parts |

The melamine wear resistant glue is made of melamine formaldehyde resin, curing agent, polyurethane resin, nano-aluminum oxide, and water, and these specific components in parts and weight are:

| | |
|---|---|
| Melamine formaldehyde resin | 100 parts |
| Curing agent | 1-3 parts |
| Polyurethane | 30-50 parts |
| Nano aluminum oxide | 10-30 parts |
| Water | 1-10 parts |

The thermosetting resin is one single kind of several kinds of melamine formaldehyde resin, phenolic resin, epoxy resin, and unsaturated polyester.

The curing agent is one single kind or several kinds of polyamine, anhydride, polyether, and methyl ethyl ketone peroxide.

Of test product in this implementation, the wear presentation layer is made by cutting commercially available printed patterned paper that has been dried after being impregnated with mixture of thermosetting resin then dried after being roll coated on the surface with melamine wear resistant glue. The high strength fireproof is the test product of implementation 1. The balance layer is made by cutting commercially available melamine paper that has been dried after being impregnated with mixture of thermosetting resin. The components in parts and weight of thermosetting resin mixture are the same with the test product in implementation 2. The components in parts and weight of melamine wear resistant glue is the same with the test product in implementation 2. The thermosetting resin and curing agent are the same with the test product in implementation 2.

The stated manufacturing method of wear resistant fireproof decorative panel above is producing high strength fireproof board according to the manufacturing method of high strength fireproof board disclosed in this invention, glue coating on both surfaces of high strength fireproof board, applying wear presentation on top surface, applying balance layer on bottom surface.

### Property test

Fire flammability test: dimension of sample length*width*thickness is 127^{∗}12.7^{∗}5mm, combust in vertical with alcohol burner for 15 minutes, move down sample vertically down in length direction and combust in flame where it is 10mm under the top of flame. Results as shown in the following table,

| Sample name | When combusting | Flame removed |
|---|---|---|
| This invention* | No odor, no obvious flame | Extinguish immediately when flame is removed, little white smog, 5mm long slight charring on surface |
| LUT Flooring | Sample softened, with pungent odor released, flame appeals in yellow, bottom appeals green | Extinguish immediately when flame is removed, little white smog, 12mm charring |
| WPC Flooring | Sample softened, with pungent odor released, flame appeals in yellow, bottom appeals green | Extinguish immediately when flame is removed, little white smog, 10mm charring |
| SPC Flooring | Sample softened, with pungent odor released, flame appeals in yellow, bottom appeals green | Extinguish immediately when flame is removed, little white smog, 8mm charring |
| Laminate Flooring | With pungent odor released, flame appeals in yellow, bottom appeals red | Extinguish 12s after flame is removed, little white smog, 18mm charring |

| | | |
|---|---|---|
| ^{∗}Note: this invention is product in implementation 1-4 | | |

Wear resistant property test: according to NALFA Standard LF 01-2011LAMINATE FLOORINGSPECIFICATIONS AND TEST METHODS, NO 3.7 Wear Resistant test method, results as shows in table below

| | Wear Resistant Turns | | | |
|---|---|---|---|---|
| Name of sample | Test 1 | Test 2 | Test 3 | Test 4 |
| Product of implementation 2 in this invention | 6240 | 6180 | 6320 | 6246 |
| LUT Flooring | 4250 | 4360 | 4150 | 4253 |
| WPC Flooring | 4360 | 4390 | 4410 | 4386 |
| SPC Flooring | 4430 | 4320 | 4280 | 4343 |
| Laminate Flooring | 4200 | 4430 | 4350 | 4326 |

Micro-scratch resistance test: test according to standard EN 16094:2012 Laminate floor coverings- Test method for the determination of micro-scratch resistance, results as shown in the following table

| | Micro-scratch resistance | | | |
|---|---|---|---|---|
| Name of product | Test 1 | Test 2 | Test 3 | Average |
| This invention* | MSR-B1 | MSR-B1 | MSR-B1 | MSR-B1 |
| LVT Flooring | MSR-B2 | MSR-B2 | MSR-B2 | MSR-B2 |
| WPC Flooring | MSR-B2 | MSR-B2 | MSR-B2 | MSR-B2 |
| SPC Flooring | MSR-B2 | MSR-B2 | MSR-B2 | MSR-B2 |
| Laminate Flooring | MSR-B1 | MSR-B1 | MSR-B1 | MSR-B1 |

| | | | | |
|---|---|---|---|---|
| ^{∗}Note: this invention is product of implementation 1-4 | | | | |

Strength test, test according to ASTM D1037 - 12Standard Test Methods for Evaluating Properties of Wood-Base Fiber and Particle Panel Materials, thickness of all test product is all 5mm, results as shown in the following table

| Sample name | Quantity of sample | Max. power | Displacement when power is at max(mm) | Posttest status of sample |
|---|---|---|---|---|
| Product in implementation 2 of this invention | 1 | 289.2 | 7.6 | No change |
| | 2 | 294.3 | 8.3 | No change |
| | 3 | 285.1 | 8.5 | No change |
| LUT Flooring | 1 | 62.4 | 22.5 | Bend |
| | 2 | 58.2 | 20.3 | Bend |
| | 3 | 63.7 | 20.2 | Bend |
| WPC Flooring | 1 | 147.6 | 12.3 | Bend |
| | 2 | 145.2 | 12.5 | Bend |
| | 3 | 143.9 | 11.8 | Bend |
| SPC Flooring | 1 | 166.7 | 4.0 | Fractured |
| | 2 | 167.9 | 4.4 | Fractured |
| | 3 | 167.8 | 4.9 | Fractured |
| Laminate Flooring | 1 | 231.9 | 6.2 | Bend |
| | 2 | 243.9 | 6.3 | Bend |
| | 3 | 233.5 | 6.5 | Bend |

## Claims

1. A high strength fireproof board, which is **characterized in that** the stated high strength fireproof board has two structures, one is three-layered hot pressed composite structure, from top to bottom are respectively fiber layer, foam fiber layer and fiber layer, the second structure is hot pressed fiber layer composite.

2. A wear resistant fireproof decorate panel, which is **characterized in that** the stated wear resistant fireproof decorate panel is made of hot press molding the high strength fireproof board included in claim 1, or second hot press molding, or composite molding after glue coated.

3. According to the wear resistant fireproof decorate panel stated in claim 2, it is **characterized in that** the stated one-time hot press molding has four structures, the first structure is respectively from top to bottom wear layer presentation layer, fiber layer, foam fiber layer, fiber layer and balance layer. The second structure is respectively from top to bottom wear layer presentation layer, fiber layer and balance layer; The third structure is respectively from top to bottom wear layer, pattern layer, fiber layer and balance layer.
The stated second hot press molding has two structures, the first structure is respectively from top to bottom wear presentation layer, high strength fireproof layer and balance layer. The second structure is respectively from top to bottom wear layer, pattern layer, high strength fireproof layer and balance layer.
The stated composite molding after glue coated has the structure of respectively from top to bottom wear layer, glue, high strength fireproof board, glue, and balance layer.

4. According to wear resistant fireproof decorate panel stated in claim 3, which is **characterized in that** the wear presentation layer is made of commercially available melamine sprayed paper or made by cutting printed patterned paper that has been dried after being impregnated with mixture of thermosetting resin then dried after being roll coated on the surface with melamine wear resistant glue.
The stated wear layer is made of transparent melamine sprayed wear resistant paper or made by cutting transparent paper that has been after being impregnated with mixture of thermosetting resin then dried after being roll coated on the surface with melamine wear resistant glue.
The stated fiber layer is made by cutting one single or multiple pieces of fiber sheets that have been dried after being impregnated with mixture of thermosetting resin.
The stated foam fiber layer is made by cutting one single or multiple pieces of fiber sheets that have been dried after being impregnated with foam mixture of thermosetting resin.
The stated pattern layer is made by printing patterns on paper or white film which is made from one single material of PE, PP, PET, PETG and PVC.
The stated balance layer is made of commercially available melamine balance paper or made by cutting paper that has been dried after being impregnated with mixture of thermosetting resin.

5. According to the wear resistant fireproof decorative paper stated in claim 4, it is **characterized in that** the stated fiber sheet is the sheet made of one single kind or several kinds of chemical fiber, natural fiber, and inorganic fiber after being knitted or needled. The stated chemical fiber is one single kind or several kinds of polyester, polypropylene, acrylic, spandex, polyamide, and vinal. Natural fiber is one single kind or several kinds of fibrilia, cotton fiber, bamboo fiber, wood fiber, and straw fiber. Inorganic fiber is one kind or several kinds of carbon fiber, glass fiber, aluminum silicate fiber, ceramic fiber, and basalt fiber.

6. According to the wear resistant fireproof decorative panel stated in claim 4, it is **characterized in that** the stated mixture of thermosetting resin is made of thermosetting resin, curing agent, graphene oxide, and water, these specific components in parts and weight are:
| | |
|---|---|
| Thermosetting resin | 100 parts |
| Curing agent | 0.5-2 parts |
| Graphene oxide | 0-2 parts |
| Water | 1-40 parts |

7. According to the wear resistant fireproof decorative panel stated in claim 4, it is **characterized in that** the stated melamine wear resistant glue is made of melamine formaldehyde resin, curing agent, polyurethane resin, nano-aluminum oxide, and water, and these specific components in parts and weight are:
| | |
|---|---|
| Melamine formaldehyde resin | 100 parts |
| Curing agent | 1-3 parts |
| Polyurethane | 30-50 parts |
| Nano aluminum oxide | 10-30 parts |
| Water | 1-10 parts |

8. According to the wear resistant fireproof decorative panel stated in claim 4, it is **characterized in that** the stated foam mixture of thermosetting resin in made of thermosetting resin, curing agent, foaming agent, and water, these specific components in parts and weight are:
| | |
|---|---|
| Thermosetting resin | 100 parts |
| Curing agent | 0.5-2 parts |
| Foaming agent | 0-10 parts |
| Polysorbate-80 | 2-3 parts |
| Water | 1-40 parts |

9. According to the wear resistant fireproof decorative panel stated in claim 6 or 8, it is **characterized in that** the stated thermosetting resin are one single kind of several kinds of melamine formaldehyde resin, phenolic resin, epoxy resin, and unsaturated polyester.

10. According to the wear resistant fireproof decorative panel stated in claim 6 or 8, it is **characterized in that** the stated curing agent is one single kind or several kinds of polyamine, anhydride, polyether, and methyl ethyl ketone peroxide.

11. According to the manufacturing method of high strength fireproof board stated in claim 1-10, it is **characterized in that** it includes the following processes, selecting corresponding tray of pressing machine according to the thickness of high strength fireproof board; from bottom to top laying the release film, each layer from bottom to top of high strength fireproof board according to structure, and release film into the tray; hot pressing and foaming for 2-60 minutes on condition of 130°C-160°C, 1-20MPa pressure in hot pressing machine; chilling for 10-30 minutes on condition of 1-20MPa pressure in cold pressing machine; and forming high strength fireproof board after removing the release film.

12. According to the manufacturing method of high strength fireproof board stated in claim 2-10, it is **characterized in that** it includes 3 manufacturing methods, the process of one-time hot press molding method is selecting corresponding tray of pressing machine according to the thickness of wear resistant fireproof decorative panel; from bottom to top laying bottom pattern, release film, layers from bottom to top according to the structure of one time hot press molding wear resistant fireproof decorative panel, release film, emboss pattern into the tray; hot pressing for 2-60 minutes on condition of 130°C-160°C, 1-20MPa pressure in hot pressing machine; chilling for 10-30 minutes on condition of 1-20MPa pressure in cold pressing machine; removing emboss pattern, release film, bottom pattern, forming one-time hot press molding wear resistant fireproof decorative panel. The process of two-time hot press molding method is manufacturing high strength fireproof board according to the method disclosed in this invention, selecting corresponding press machine tray according to the thickness of two-step wear resistant fireproof decorative panel, from bottom to top laying each layer of two-step wear resistant fireproof decorative panel respectively into the tray, hot pressing for 0.5-10 minutes on the condition of 130°C-190°C, 1-50MPa, forming two-time hot press molding wear resistant fireproof decorative panel. The process of glue coat composite method is manufacturing high strength fireproof board according to the manufacturing method of high strength fireproof board disclosed in this invention, coating glue on both surfaces of high strength fireproof board, attaching wear resistant presentation layer onto to top surface, attaching balance layer to onto the bottom surface.

13. The high strength fireproof board is applied as partition board, protection board, and when applied to decorative panel it would be applied as decorative panel and sound insulation board.

14. The application of wear resistant fireproof decorative panel in flooring, wall board, and decorative board.
